# EUROPÄISCHE PATENTSCHRIFT

(11) **EP 2 034 286 B1**
(45) Veröffentlichungstag und Bekanntmachung des Hinweises auf die Patenterteilung: **31.10.2012**
(21) Anmeldenummer: 07115905.7
(22) Anmeldetag: 07.09.2007
(51) Int. Cl.: G01J 3/10, G01N 21/25, H04N 1/60

(54) **Verfahren zur Druckprozesskontrolle unter Verwendung eines spektralen Messsystems mit spatialem Lichtmodulator**
Method of controlling printing process using a spectral measuring system comprising spatial light modulator
Méthode de contrôle d'un processus d'impression utilisant un système de mesure spectral comprenant un modulateur spatial de lumière

(43) Veröffentlichungstag der Anmeldung: 11.03.2009
(73) Patentinhaber: X-Rite Europe GmbH, 8105 Regensdorf (CH)
(72) Erfinder: Ehbets, Peter, 8046 Zürich (CH)
(74) Vertreter: Schwabe - Sandmair - Marx

(56) Entgegenhaltungen:
- US-A1- 2007 009 148
- US-A1- 2007 132 998

## Beschreibung

Die Erfindung betrifft ein Messverfahren zur fotoelektrischen Abtastung von Messstellen eines Messobjekts gemäss dem Oberbegriff des unabhängigen Anspruchs 1.

Messsysteme der gattungsgemässen Art werden typischerweise in der Druckprozesskontrolle eingesetzt. Bei dieser Anwendung werden typischerweise Farbmessfelder der verschiedenen am Druck beteiligten Drucktinten ausgemessen. Die Farbmessfelder haben typischerweise eine Seitenlänge von einigen Millimetern und werden üblicherweise am Rande neben dem eigentlichen Druckbild mitgedruckt.

Die typischen im Druckprozess eingesetzten Druckkontrollstreifen werden heute entweder mit konventionellen Hand-Spektralphotometern oder mit abtastenden Messsystemen wie z.B. dem Intellitrax System der Firma X-Rite oder dem AxisControl System der Firma Heidelberger Druckmaschinen ausgemessen. Diese Systeme sind mit einem spektralen Einzelmesskopf ausgestattet. Das Intellitrax System weist ferner ein Spurfindungssystem zur automatischen Führung und Positionierung des Messkopfs entlang des Druckkontrollstreifens und zur Synchronisierung der Messrate auf.

Die von den mitgedruckten Farbmessfeldern eingenommene Druckfläche verursacht Papierabfall, und es besteht daher aus Kostengründen ein klares Bedürfnis, diese Fläche so klein wie möglich zu halten.

Die Verwendung kleinerer Farbmessfelder erhöht die Messanforderungen in mehrfacher Hinsicht.

Kleinere Farbmessfelder sind mittels Handmessgeräten schwierig auszumessen. Unter einer gewissen Grösse wird die präzise Positionierung des Messgeräts von Hand praktisch unmöglich. Bei sehr kleinen Farbmessfeldern ist daher ein automatisches Messsystem erforderlich mit elektronisch unterstützter Positioniertechnologie, um die exakte Position der Farbmessfelder auf dem Messobjekt aufzufinden.

Die Grösse der Farbmessfelder ist auch beschränkt durch die Gleichmässigkeit des Druckprozesses und der angewandten Rasterfrequenz. Die Messtechnik muss einen repräsentativen Mittelwert ermitteln können, welcher unabhängig von lokalen Schwankungen des Farbauftrages oder von der relativen Positionierung zur Rasterstruktur ist. Zu kleine Farbmessfelder ermöglichen keine genügende Mittelung. Eine Möglichkeit, diese Schwierigkeit zu umgehen, besteht in der Aufteilung der Farbmessfelder in eine Vielzahl von kleineren Farbmesselementen. Dies erlaubt, diese Farbmesselemente über das gesamte Messobjekt verteilt anzuordnen an Stellen, wo sie nicht stören. Das Ausmessen vieler kleinerer Farbmesselemente erlaubt ferner eine Mittelung der Messwerte (aus gleichen Farbmesselementen bzw. Farbmesselementen mit gleichen spektralen Reflexionseigenschaften) und damit die Gewinnung repräsentativer Messwerte.

Messgeschwindigkeit bzw. Messzeit ist ebenfalls ein wichtiger Faktor in einem produktiven Druckprozess. Die Ausmessung der genannten vielen kleinen Farbmesselemente sollte idealerweise gleichzeitig (parallel) erfolgen, wozu Bilderfassungs- bzw. Bildverarbeitungstechniken erforderlich sind. Eine Schwierigkeit bei bildverarbeitenden Technologien im Zusammenhang mit relativ kleinen Farbmesselementen stellt das beträchtliche optische Übersprechen dar, das durch die Beleuchtung der den Farbmesselementen benachbarten Bildbereiche verursacht wird. Typische Übersprechwerte liegen in der Grössenordnung von 1% oder höher, was für die Prozesskontrolle und für Qualitätsbeurteilungsanwendungen nicht akzeptabel ist. Es müssen daher Massnahmen getroffen werden, um das Übersprechen zu eliminieren.

Eine Messfeldanordnung mit kleineren Messfeldern wurde von FOGRA und UGRA unter der Bezeichnung Minitargets eingeführt. Ein solches Minitarget umfasst 12 Farbmessfelder, die in einer fest vorgegebenen Matrix angeordnet sind. Die Gesamtabmessungen des Minitargets sind aber immer noch 10 mm * 13 mm, so dass auch damit der Papierabfall nicht ganz vermieden werden kann. Die Firma Techkon hat ein Kamera-basiertes Dichtemesssystem entwickelt (MTC920), das für die Ausmessung und Analyse solcher Minitargets geeignet ist.

Die Dokumente EP1213568B1 und EP1213569B1 beschreiben spektrale Bildmesstechniken mit numerischer Übersprechkompensation. Diese Techniken erfordern jedoch komplizierte Charakterisierungen und sind für sehr kleine Messobjekte nur beschränkt geeignet.

Die US 2007/0009148 A beschreibt ein Verfahren, eine optische Inspektionsvorrichtung sowie ein Computerprogrammprodukt zur optischen Inspektion einer Oberfläche. Die optische Inspektionsvorrichtung kann effektiv für eine optische Inspektion von periodischen Strukturen von z. B. einem Halbleiterwaver zum Zwecke der Qualitätssteuerung eingesetzt werden. Durch effektives Teilen eines Lichtstrahls in eine Vielzahl von räumlich getrennten Lichtstrahlen und durch selektive Verwendung dieser Lichtstrahlen können verschiedene Oberflächensegmente der Oberfläche gleichzeitig durch Überlagerung von jeweiligen Bildern inspiziert werden. Ein sich ergebendes Überlagerungsbild kann dann mit einem Referenzbild verglichen werden, um Defekte der Oberfläche zu detektieren.

Durch die vorliegende Erfindung soll ein Messverfahren der gattungsgemässen Art dahingehend verbessert werden, dass es zur präzisen Ausmessung der spektralen Reflexionseigenschaften von sehr kleinen und insbesondere innerhalb eines Druckbilds verteilt angeordneten Farbmesselementen bzw. Messstellen geeignet ist. Insbesondere sollen dabei optische Übersprecheffekte eliminiert oder weitestgehend reduziert werden.

Diese der Erfindung zugrundeliegende Aufgabe wird durch die Merkmale des unabhängigen Anspruchs gelöst. Weiterbildungen und besonders vorteilhafte Ausgestaltungen der Erfindung sind Gegenstand der abhängigen Ansprüche.

Die Grundidee der Erfindung besteht darin, dass das erfindungsgemässe Messverfahren sowohl im Beleuchtungskanal als auch im eigentlichen Messkanal mit bildgebenden Fähigkeiten ausgestattet ist.

Die im Messkanal gewonnenen Bilddaten des Druckbilds (Messobjekts) werden als Grundbilddaten für die Identifikation von interessierenden Messstellen im Bild (Messobjekt) benutzt. Diese Grundbilddaten werden dann dafür verwendet, das bildgebende System im Beleuchtungskanal zu steuern, um ein angepasstes Beleuchtungsmuster mit hellen und dunklen Stellen in der Messebene (Ebene des Messobjekts) zu erzeugen. Das Beleuchtungsmuster ist darauf ausgerichtet, die interessierenden Messstellen optisch zu isolieren oder das optische Übersprechen von Bilddaten aus anderen Bildsiellen wenigstens auf ein akzeptables Niveau zu reduzieren.

Die interessierenden Messstellen sind durch die Anwendung, in der das Messsystem eingesetzt ist, definiert und können z.B. kleine Farbkontrollelemente umfassen, die über die Fläche des Druckbilds verteilt sind. Messstellen mit ähnlichen Eigenschaften können isoliert und parallel gemessen werden. Messstellen mit unterschiedlichen Eigenschaften können sequentiell gemessen werden unter Anwendung entsprechend angepasster Beleuchtungsmuster.

Aufgrund der bildgebenden Fähigkeiten in beiden Kanälen (Beleuchtungs- und Messkanal) und der freien Programmierbarkeit (Steuerbarkeit) des Beleuchtungssystems ist das Messsystem nicht auf ein fixes Format beschränkt.

Das Beleuchtungs- (bzw. Maskierungs-)muster kann auf verschiedene Weise berechnet werden. Falls die Bildpunktpositionen der interessierenden Messstellen innerhalb des Messobjekts bzw. Bilds bekannt sind, ist eine direkte Berechnung offensichtlich möglich, d.h. das Beleuchtungsmuster wird so eingestellt, dass nur Bildpunkte aus den interessierenden Messstellen beleuchtet werden, alle anderen Bildpunkte werden nicht beleuchtet (maskiert).

Andernfalls können die Bilddaten nach ihren spektralen Reflexionseigenschaften analysiert und daraus entsprechende Beleuchtungsmuster berechnet werden. Die Analyse kann z.B. darauf basieren, Zonen mit ähnlich niedrigen Reflexionswerten zu identifizieren und dann nur diese zu beleuchten, Zonen mit unterschiedlichen höheren Reflexionswerten also nicht zu beleuchten bzw. zu maskieren.

Bekannte Verfahren, welche für die spektrale Bildmessung verwendet werden, beruhen auf einer Messreihe, bei der die Bilddaten für jeden Filterkanal oder Wellenlängenbereich sequentiell erfasst werden. Konkrete Beispiele sind Beleuchtungsanordnungen mit weisser Lichtquelle und Monochromator oder Filterrad oder die Verwendung eines Filterrades im Messkanal. In diesem Fall wird für jedes Bild eines Filterkanals die Maskenfunktion angepasst. Ausschlaggebend für das Segmentationskriterium einer ersten Messung zur Analyse der Bilddaten ist die Amplitude des lokalen Reflektionsfaktors. Zonen mit ähnlichen tiefen Reflektionsfaktoren können im Bild über die Amplitude der Messwerte identifiziert werden und dann mit einer entsprechenden Maskenfunktion (Beleuchtungsmuster) in der Beleuchtung präzise gemessen werden. Als konkretes Segmentationskriterium kann zum Beispiel ein lokaler Reflektionsfaktor kleiner als 0.1 mal dem entsprechenden Weisspegel verwendet werden. Diese zweite Messung ermöglicht eine aktive Reduzierung des räumlichen Übersprechens sowie eine Anpassung der Integrationszeit, um eine höhere Aussteuerung der Signalpegel zu erhalten und das Rauschen zu reduzieren. Zonen mit hohen Reflektionsfaktoren sind nicht kritisch in Bezug auf Übersprechen. Diese Messwerte können direkt aus der ersten Analysemessung verwendet werden.

Das Dokument US 2007/0132998A1 beschreibt ein Fluoreszenzmikroskop zur Beobachtung und elektronischen Bilderfassung von fluoreszierenden biologischen Strukturen. Zur Vermeidung von photo-toxischen Effekten und zur Anpassung an die Dynamik der eingesetzten Bildsensoren kann das die Fluoreszenz anregende Beleuchtungslicht spatial intensitätsmässig moduliert werden. Die Steuerung des eingesetzten spatialen Modulators und des von diesem erzeugten Beleuchtungsmusters erfolgt numerisch anhand der vom Bildsensor erzeugten Bilddaten so, dass der Bildsensor in seinem optimalen Empfindlichkeitsbereich arbeitet. Ferner kann das Beleuchtungsmuster auch manuell so eingestellt werden, dass nur interessierende Bereiche des Messobjekts beleuchtet werden. Das Dokument zeigt somit zwar, dass die im erfindungsgemässen Messsystem eingesetzten Techniken als solche nicht unbekannt sind, jedoch in einem völlig anderen Zusammenhang und mit völlig anderer Zielsetzung.

Das erfindungsgemässe Messsystem kann unter Verwendung von eindimensionalen bildgebenden Abtasteinrichtungen wie z.B. (Zeilen-)Scannern als auch mit zweidimensionalen bildgebenden Abtasteinrichtungen wie digitalen Kameras etc. realisiert werden.

Im Folgenden wird ein mit einer digitalen Kamera, d.h. einer zweidimensionalen bildgebenden Abtasteinrichtung ausgerüstetes Ausführungsbeispiel des erfindungsgemässen Messsystems anhand der Zeichnung näher erläutert. In der Zeichnung zeigen:
- Fig. 1: eine schematische Darstellung des Ausführungsbeispiels des erfindungsgemässen Messsystems und
- Fig. 2: ein Beispiel einer spatial modulierten Beleuchtung des Messobjekts.

Das Messsystem umfasst einen Beleuchtungskanal zur Beaufschlagung eines in einer Messebene MP angeordneten Messobjekts M mit Beleuchtungslicht und einen Messkanal zum Auffangen und zur fotoelektrischen Wandlung des vom Messobjekt M zurückgeworfenen Messlichts.

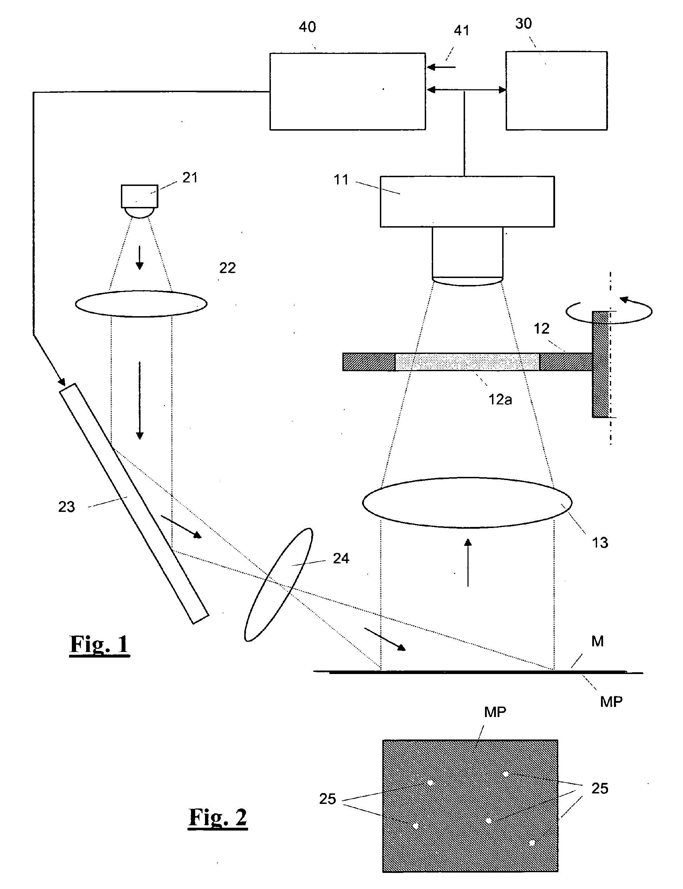

Die Geometrie des Beleuchtungskanals und des Messkanals ist gemäss den für den Einsatzzweck des Messsystems geltenden internationalen Normen ausgelegt. Typisch für Farbmessanwendungen im grafischen Gewerbe ist z.B. eine 45°/0°-Geometrie nach ISO 13655, wie sie auch in Fig. 1 dargestellt ist.

Der Messkanal umfasst eine digitale Kamera 11 mit einem zweidimensionalen Bildsensor, ein rotierendes Filterrad 12 mit Filtern 12a unterschiedlicher spektraler Transmissionskurven und ein Linsensystem 13, welches die Messebene MP auf den Bildsensor der Kamera 11 abbildet. Es versteht sich, dass für die spektrale Auflösung des Messkanals anstelle des Filterrads 12 auch jede andere Technologie eingesetzt werden kann.

Der Beleuchtungskanal umfasst eine weisse Lichtquelle 21, ein Beleuchtungsobjektiv 22, einen elektrisch steuerbaren spatialen Lichtmodulator 23 und ein Abbildungsobjektiv 24. Das Beleuchtungsobjektiv 22 leuchtet den Lichtmodulator 23 gleichmässig aus. Der Lichtmodulator 23 bewirkt eine räumliche Modulation des Beleuchtungslichts, und das Abbildungsobjektiv 24 bildet die räumliche Intensitätsverteilung des Beleuchtungslichts nach dem Lichtmodulator 23 auf die Messebene MP ab.

Der Lichtmodulator 23 umfasst eine Vielzahl von einzeln ansteuerbaren Modulatorelementen, welche zumindest ein- und ausgeschaltet werden können, so dass sie Licht durchlassen oder nicht durchlassen. Es kann auch ein Lichtmodulator eingesetzt werden, dessen Modulatorelemente Graustufen zu erzeugen in der Lage sind. Der Lichtmodulator kann im Transmissions- oder im Reflexionsmodus betrieben werden. Geeignete spatiale Lichtmodulatoren sind kommerziell erhältlich. Beispiele dafür sind Flüssigkristall-basierte Systeme (Transmissionsmodus) oder auf Micro-Electro-Mechanical System (MEMS) Technologie in Silizium basierende Modulatoren (Reflexionsmodus), speziell Digital Mirror Devices (DMD) der Firma Texas Instruments, oder LCOS-basierte Modulatoren (Liquid Crystal on Silicon). Im dargestellten Ausführungsbeispiel ist als Lichtmodulator 23 ein im Reflexionsmodus arbeitender DMD-basierter Typ eingesetzt. Dieser Lichtmodulator besteht aus einer Matrix von ansteuerbaren miniaturisierten Kippspiegeln, welche in zwei Zustände (ein/aus) elektrisch geschaltet werden können.

Das Messsystem umfasst ferner eine Verarbeitungseinheit 30 für die Aufbereitung, Verarbeitung und Bereitstellung der von der Kamera 11 erzeugten Messdaten und eine Steuerungseinheit 40 zur elektronischen Ansteuerung des spatialen Lichtmodulators 23.

In der Steuerungseinheit 40 ist die Zuordnung zwischen Beleuchtungsbildpunkten (Modulatorelementen, Kippspiegeln) auf dem spatialen Lichtmodulator 23 und Beobachtungsbildpunkten in der Messebene MP gespeichert. Ferner ist die Steuerungseinheit 40 mit Bildanalysefähigkeiten ausgestattet. Letztere werden dazu benutzt, das für die Ausmessung der interessierenden Messstellen erforderliche Beleuchtungs- bzw. Maskierungsmuster zu berechnen. Dies erfolgt, wie schon weiter oben erwähnt, entweder über die Kenntnis der Positionen der interessierenden Messstellen oder mittels passender Algorithmen, die die spektralen Reflexionseigenschaften der Messstellen auswerten. Die Positionen der interessierenden Messstellen oder sonstige Steuerparameter können der Steuerungseinheit 40 über einen Eingang 41 manuell oder von einer übergeordneten Anwendungssteuerung zugeführt werden.

Die Steuerungseinheit 40 erzeugt Steuersignale für die einzelnen Modulatorelemente des spatialen Lichtmodulators 23, um das zuvor berechnete Beleuchtungs- bzw. Maskierungsmuster zu erzeugen. Dazu werden die einzelnen Modulatorelemente des Lichtmodulators 23 entsprechend dem gewünschten Beleuchtungsmuster ein- bzw. ausgeschaltet.

Die Ausmessung des Messobjekts M beginnt mit einer Erfassung des gesamten Bilds mittels der Kamera 11 und der Lokalisierung der interessierenden Messstellen. Danach erfolgt die präzise Ausmessung jeweils nur der interessierenden Messstellen im Bild in einem oder mehreren Durchgängen, je nach Art und Anzahl der interessierenden Messstellen. Für diese Messungen wird das Beleuchtungslicht jeweils passend räumlich moduliert. Die Steuerungseinheit 40 berechnet anhand der im ersten Schritt erfassten Bilddaten und der lokalisierten Messstellen die Anzahl der erforderlichen unterschiedlichen Beleuchtungsmuster und damit der sequentiell durchzuführenden Messdurchgänge.

In der Fig. 2 ist ein beispielsweises Beleuchtungsmuster dargestellt. Der grösste Teil der Messebene MP ist unbeleuchtet, und nur einige interessierende Messstellen 25 sind mit Beleuchtungslicht beaufschlagt.

Das erfindungsgemässe Messsystem kann vielfältig abgewandelt werden.

So kann z.B. im Messkanal eine RGB- Kamera und im Beleuchtungskanal eine auf verschiedene Wellenlängenbereiche einstellbare schaltbare Lichtquelle vorgesehen sein. Die schaltbare Lichtquelle kann durch eine weisse Lichtquelle in Kombination mit einem Monochromator oder einem Filterrad oder eine Kombination von Leuchtdioden mit unterschiedlichen Emissionswellenlängen oder jede andere Anordnung realisiert sein, welche Beleuchtungslicht unterschiedlicher Wellenlängenbereiche zu erzeugen vermag.

Im Messkanal kann eine Kombination aus einer konventionellen RGB-Kamera und einem Einkanalspektrometer eingesetzt sein. Das Einkanalspektrometer ermöglicht die Messung eines Spektrums für den erfassten Messbereich. Ein typisches Beispiel ist ein Gitterspektrometer mit einem Eintrittsspalt und einer Detektorzeile für die Erfassung der spektralen Daten. Eine selektive Auswertung von Bilddaten innerhalb des erfassten Messbereichs ist nicht möglich. Diese Funktionalität wird durch die spatial modulierbare Beleuchtung erreicht, welche in einer Messung nur Bereiche von gleicher Farbe beleuchtet. Die spekrale Messung mit dem Einkanalspektrometer entspricht dann einem Mittelwert über alle räumlichen Bereiche.

Die von der Kamera erzeugten RGB-Bilddaten werden dazu benutzt, die Messstellen mit gleichen Farbaufbau im Bild zu identifizieren. Gleicher Farbaufbau heisst hier gleiche RGB Messwerte. Jede dieser Messstellen wird dann anschliessend mittels eines entsprechenden Beleuchtungsmusters optisch isoliert und mittels des Spektrometers spektral ausgemessen.

Das erfindungsgemässe Messsystem kann als Labormessgerät ausgelegt sein, das die Ausmessung grösserer Druckbögen gestattet.

Es kann auch innerhalb eines Handmessgeräts implementiert sein und damit dem Handmessgerät gegenüber herkömmlichen Messgeräten dieser Art neue Eigenschaften und Messmöglichkeiten verleihen, z.B. variable Messfeldgrösse und automatische Messfeldidentifikation.

Der Beleuchtungskanal kann auch mit Zoom-Fähigkeiten ausgerüstet sein, was unterschiedliche Auflösungen und Messflächengrössen erlaubt.

Das erfindungsgemässe Messsystem kann für die Ausmessung von Textilien aus oder mit unterschiedlich gefärbten Fäden eingesetzt werden. Durch die spatiale Modulation des Beleuchtungslichts können die einzelnen Fäden optisch von ihrer Umgebung isoliert werden, wodurch ihr Reflexionsspektrum mit grösserer Präzision gemessen werden kann.

Das erfindungsgemässe Messsystem kann für kolorimetrische Anwendungen im sichtbaren Lichtwellenlängenbereich oder für andere Anwendungen in anderen Lichtwellenlängenbereichen, z.B. nahes Infrarot oder Ultraviolett, eingesetzt werden.

Die technischen Prinzipien des erfindungsgemässen Messsystems sind auch sehr für inline und online Messsysteme im Druckprozess geeignet. In diesem Anwendungskontext kann die spatial modulierbare Beleuchtung dazu benutzt werden, ein geeignetes Beleuchtungsmuster von Druckbogen zu Druckbogen bzw. von Bildgegenstand zu Bildgegenstand zu erzeugen. Auf jedem Druckbogen wird das Beleuchtungsmuster so gewählt, dass jeweils ein ausgewählter Typ eines Druckkontrollelements oder jeweils nur Messstellen mit ähnlicher spektraler Absorption parallel erfasst und ausgemessen werden. Die Berechnung und Optimierung der Beleuchtungsmuster erfolgt, sobald zu Beginn des Druckprozesses einmal ein komplettes Druckbild erfasst und gespeichert worden ist. Anschliessend erfolgen die weiteren Messungen nur noch sequentiell mit entsprechend angepassten Beleuchtungsmustern, um das Übersprechen zu unterdrücken. Zur eigentlichen Ausmessung kann eine ausreichend schnelle zweidimensionale digitale Kamera (wie im in Fig. 1 dargestellten Ausführungsbeispiel) oder auch eine eindimensionale Zeilenkamera eingesetzt werden, wobei dann das Beleuchtungsmuster entlang der jeweiligen Abtastzeile und entsprechend der jeweiligen Position der Abtastzeile erzeugt wird.

## Patentansprüche

1. Verfahren zur Druckprozesskontrolle umfassend die Ausmessung spektraler Reflexionseigenschaften von innerhalb eines Druckbilds verteilt angeordneten Farbmesselementen, mit einem Messsystem aufweisend einen Beleuchtungskanal zur Beaufschlagung des in einer Messebene (MP) angeordneten Messobjekts (M) mit Beleuchtungslicht,
- mit einem Messkanal zum Auffangen und zur fotoelektrischen Wandlung des von den Messstellen des Messobjekts (M) zurückgeworfenen Messlichts,
- wobei der Beleuchtungskanal und/oder der Messkanal dafür ausgebildet sind, die Reflexionseigenschaften der Messstellen in mehreren Wellenlängenbändern zu erfassen,
- wobei der Beleuchtungskanal einen von einer elektronischen Steuerungseinheit gesteuerten spatialen Lichtmodulator zur Erzeugung eines räumlichen Beleuchtungsmusters aufweist, welches die selektive Beaufschlagung von interessierenden Messstellen des Messobjekts (M) mit Beleuchtungslicht bewirkt, und
- wobei der Messkanal eine digitale Kamera aufweist, welche Bilddaten des Messobjekts erzeugt und der Steuerungseinheit zur Berechnung von Beleuchtungsmustern zuführt, und
- wobei die Steuerungseinheit aus Bilddaten des Messobjekts (M) für den Anwendungszweck geeignete Messstellen anhand von vorgegebenen spektralen Reflexionseigenschaften lokalisiert und
- entsprechende Beleuchtungsmuster zur selektiven Beleuchtung der Messstellen berechnet,
- sowie den spatialen Lichtmodulator zur Erzeugung der berechneten Beleuchtungsmuster ansteuert, und
- wobei Messstellen mit ähnlichen Reflexionseigenschaften isoliert und parallel gemessen werden und
- Messstellen mit unterschiedlichen Eigenschaften unter Anwendung entsprechend angepasster Beleuchtungsmuster sequentiell gemessen werden.

2. Messverfahren nach Anspruch 1, **dadurch gekennzeichnet, dass** die Geometrie des Beleuchtungskanals und des Messkanals eine 45°/0°-Geometrie ist

3. Messverfahren nach Anspruch 2, **dadurch gekennzeichnet, dass** die Steuerungseinheit (40) dazu ausgebildet ist, Beleuchtungsmuster aufgrund von Positionsdaten von interessierenden Messstellen (25) zu berechnen und den spatialen Lichtmodulator (23) zur Erzeugung der berechneten Beleuchtungsmuster anzusteuern.

4. Messverfahren nach Anspruch 1, **dadurch gekennzeichnet, dass** die Steuerungseinheit (40) die Messstellen aus den Bilddaten des Messobjekts (M) anhand von vorgegebenen spektralen Reflexionseigenschaften lokalisiert.

5. Messverfahren nach Anspruch 1 oder 4, **dadurch gekennzeichnet, dass** der Messkanal zusätzlich zur bildgebenden Abtasteinrichtung einen Spektralmesskopf für die Ausmessung der interessierenden Messstellen aufweist.

6. Messverfahren nach einem der vorangehenden Ansprüche, **dadurch gekennzeichnet, dass** die spektrale Auflösung durch eine auf verschiedene Wellenlängenbereiche einstellbare Lichtquelle im Beleuchtungskanal (21-24) implementiert ist.

## Claims

1. A method for printing process-control comprising the measurement of spectral reflection properties of colour test elements arranged distributed within a printed image, with a measuring system comprising an illumination channel for the supply of illumination light to the object under test (M) disposed in a measurement plane (MP),
- with a measurement channel for capturing and for the photo-electric conversion of the test light reflected back from the test positions of the object under test (M),
- wherein the illumination channel and/or the measurement channel are embodied to register the reflection properties of the test positions in several wavelength bands,
- wherein the illumination channel provides a spatial light modulator controlled by an electronic control unit in order to generate a spatial illumination pattern, which causes the selective supply of interesting test positions of the object under test (M) with illumination light, and
- wherein the measurement channel provides a digital camera, which generates image data of the object under test and supplies them to the control unit for the calculation of illumination patterns, and
- wherein, on the basis of specified spectral reflection properties, the control unit localises test positions suitable for the purpose of the application from image data of the object under test (M) and
- calculates corresponding illumination patterns for the selective illumination of the test positions,
and controls the spatial light modulator to generate the calculated illumination patterns, and
- wherein test positions with similar reflection properties are isolated and measured in parallel, and
- test positions with different properties are measured sequentially using correspondingly adapted illumination patterns.

2. The measuring method according to claim 1,
**characterised in that**
the geometry of the illumination channel and of the measurement channel is a 45°/0° geometry.

3. The measuring method according to claim 2,
**characterised in that**
the control unit (40) is embodied to calculate illumination patterns on the basis of position data from interesting test positions (25) and to control the spatial light modulator (23) to generate the calculated illumination patterns.

4. The measuring system according to claim 1,
**characterised in that**
the control unit (40) localises the test positions from the image data of the object under test (M) on the basis of the specified spectral reflection properties.

5. The measuring system according to claim 1 or 4,
**characterised in that**,
in addition to the image-generating scanning device, the measurement channel provides a spectral sensor for the measurement of the interesting test positions.

6. The measuring system according to any one of the preceding claims,
**characterised in that**
the spectral resolution is implemented through a light source in the illumination channel (21-24) adjustable to different wavelength ranges.

## Revendications

1. Méthode de contrôle d'un processus d'impression comprenant la mesure de caractéristiques de réflexion spectrale d'éléments de mesure de couleur répartis à l'intérieur d'une image imprimée, au moyen d'un système de mesure comportant un canal d'éclairage pour appliquer une lumière d'éclairage sur un objet de mesure (M) disposé dans un plan de mesure (MP),
- avec un canal de mesure pour le captage et pour la conversion photoélectrique de la lumière de mesure reflétée par les points de mesure de l'objet de mesure (M),
- où le canal d'éclairage et/ou le canal de mesure sont configurés pour capturer les caractéristiques de réflexion des points de mesure dans plusieurs bandes de longueur d'onde,
- où le canal d'éclairage comporte un modulateur spatial de lumière contrôlé par une unité de contrôle électronique pour générer un modèle d'éclairage spatial qui opère l'application sélective de la lumière d'éclairage sur des points de mesure intéressants de l'objet de mesure (M), et
- où le canal de mesure comporte une caméra numérique, qui génère des données d'image de l'objet de mesure et les envoie à l'unité de contrôle pour calculer des modèles d'éclairage,
- où l'unité de contrôle localise à partir des données d'image de l'objet de mesure (M), au moyen de caractéristiques de réflexion spectrale prédéterminées, des points de mesures adaptés à l'objectif d'utilisation et
- calcule des modèles d'éclairage pour l'éclairage sélectif des points de mesure,
- ainsi que commande le modulateur spatial de lumière pour générer les modèles d'éclairage calculés, et
- où des points de mesure avec des caractéristiques de réflexion spectrale similaires sont isolés et mesurés en parallèle et
- des points de mesure avec des caractéristiques différentes sont mesurés de manière séquentielle en utilisant des modèles d'éclairages adaptés en conséquence.

2. Méthode de mesure selon la revendication 1, **caractérisée en ce que** la géométrie du canal d'éclairage et du canal de mesure est une géométrie 45°/0°.

3. Méthode de mesure selon la revendication 2, **caractérisée en ce que** l'unité de contrôle (40) est configurée pour calculer des modèles d'éclairage en vertu de données de position de points de mesures (25) intéressants et pour commander le modulateur spatial de lumière (23) pour générer les modèles d'éclairage calculés.

4. Méthode de mesure selon la revendication 1, **caractérisée en ce que** l'unité de contrôle (40) localise les points de mesure parmi des données d'image de l'objet de mesure (M) au moyen de caractéristiques de réflexion spectrale prédéterminées.

5. Méthode de mesure selon les revendications 1 ou 4, **caractérisée en ce que** le canal de mesure comporte, en plus du dispositif de balayage et de formation d'image, une tête de mesure spectrale pour mesurer les points de mesure intéressants.

6. Méthode de mesure selon l'une quelconque des revendications précédentes, **caractérisée en ce que** la résolution spectrale est mise en oeuvre par une source lumineuse à l'intérieur du canal d'éclairage (21 - 24) réglable sur différentes bandes de longueur d'onde.
